# EUROPEAN PATENT APPLICATION

(11) **EP 4 201 646 A1**
(43) Date of publication of application: **28.06.2023**
(21) Application number: 21216742.3
(22) Date of filing: 22.12.2021
(51) Int. Cl.: B29C 64/106, B29B 15/08, B29B 15/12, B29C 64/209, B29C 64/295, B29C 64/321, B33Y 10/00, B33Y 30/00, B33Y 70/10, B29C 70/38

(54) **FIBRE-REINFORCED POLYMER PRINTING APPARATUS AND METHOD**

(71) Applicant: Siemens Energy Global GmbH & Co. KG, 81739 München (DE)
(72) Inventor: Pandelidi, Chrysoula, Melbourne (AU); Brandt, Milan, Melbourne, 3001 (AU); Piegert, Sebastian, 03222 Lübbenau (DE)

(57) **Abstract**

A nozzle apparatus (10) for making a three-dimensional composite material structure (S) by depositing a polymer matrix material (M) and a reinforcement fibre (F) is presented. The apparatus (10) comprises a first part (1) with a fibre feed adapter (6) and a polymer inlet (9), and a second part (2), which is configured to be fit to the fibre feed adapter (6) downflow of the first part (1), wherein the first part (1) and the second part (2), in an assembled state of the apparatus (10), form a flow channel (C) for the polymeric material (M) and divide said channel (C) into a first zone (Z1) and a second zone (Z2), wherein the apparatus (10) is configured to heat the polymer material (M) to a first temperature (T1) above its glass transition temperature in the first zone (Z1) and to a second temperature (T2), being higher than the first temperature (T1), in the second zone (Z2), and wherein for each of the zones (Z1, Z2) of the channel (C) a temperature of the polymeric material (M) can be regulated independently. Moreover, a material extrusion device and a method of making the three-dimensional composite material structure are provided.

## Description

A nozzle or liquefier apparatus for making, manufacturing or 3D printing a three-dimensional composite material structure is provided. The apparatus is preferably suitable for depositing or extruding a polymer matrix material and a reinforcement fibre. Moreover, a related material extrusion additive manufacturing device and method of establishing said composite material structure are provided.

Said composite material structure or a related object or article preferably denotes a high-performance (metal-replacement) polymer component, such as a component applied in generators blower shrouds or fan blades, wind power components, blades, or tooling equipment in general. In the alternative, the component may pertain to a high-performance component, such as a component applied in power generation, in the aviation or the automotive industry.

Additive or layerwise deposition manufacturing (AM) or 3D-printing techniques comprise e.g., powder-bed-fusion methods, or Material Extrusion (ME) techniques; also known as "Fused Deposition Modelling" (FDM), "Fused Filament Fabrication" (FFF), or filament freeform fabrication. These techniques usually apply a filament of a thermoplastic material. The filament is e.g., pulled or unwound from a large spool tow, heated in a liquefier and then deposited on a growing substrate or structure.

The print head is usually moved under computer control to implement a predetermined shape such as provided by a CAD file. Usually, the head moves in two dimensions to deposit one horizontal plane or layer at a time; the work or the print head is then moved vertically by a small amount to begin a new layer. The speed of the extruder head may also be controlled to stop and start deposition and form an interrupted plane.

In the ME process, the final parts are particularly constructed through layer-by-layer adhesion of thermoplastic polymers.

Additive manufacturing has proven to be useful and advantageous in the fabrication of prototypes or complex components, such as components with filigree structure or functionally cooled components. Further, the additive manufacture stands out for its short chain of process steps which in turn enables material economization and a particularly low lead time. Further additive manufacturing approaches relate to "Directed Energy Deposition (DED)", such as laser cladding, electron beam or plasma welding, metal inkjet molding (MIM), so-called sheet lamination methods, or even thermal spraying (VPS, LPPS) methods.

Today, there is an increasing need for a technology that can reliably enable the fabrication of continuous fibre reinforced polymer composites, due to their potential to reduce the weight of load bearing components without compromising their stiffness and strength. More so of interest is the use of high-performance, high-temperature polymers as the matrix material because they can withstand significant loads at increased temperatures. However, even though technologies that enable the use of commodity and engineering polymers are available and research has been conducted to develop systems for high-performance polymers, a fully functioning technology for high-temperature high-performance thermoplastic polymers is yet to be made available on the market.

Usually, the overall mechanical properties of ME-manufactured parts are weaker as compared to conventional fabrication methods, like injection molding, due to weak adhesion between the deposited layers. Thus, there is a stringent demand for the accessibility of new materials and process solutions which help to improve mechanical properties of the products. Particularly, a smart heat management with a high-resolution temperature control in and in the vicinity of the nozzle is required in order to e.g., increase the level of crystallinity in the structure, which is crucial for the improvement of its mechanical properties.

In the prior art system are already known which enable to process carbon, glass, and Kevlar reinforced polyamide. It is a closed system that only allows the use of the custom developed materials. Additionally, it uses two extruders, one for the unreinforced polyamide and one for the pre-impregnated reinforcing fibres. Another system is aiming at high-performance materials, however, using thermoset polymers for sizing of the reinforcement which has so far limited its use as a high-temperature system. Further solutions in the given technical context are particularly described in US 5,936,861A and US 2016/0311165 A1, for example.

It is, thus, an object of the present invention to provide improved means 3D-printing capabilities of polymers, particularly extrusion-based methods like ME, which shall particularly enable an ease of processing of the related materials as well as to broaden process applicability and to endow the as-manufactured structure is with the above described superior (mechanical) properties.

The mentioned object is achieved by the subject-matters of the independent claims. Advantageous embodiments are subject-matters of the dependent claims.

An aspect of the present invention relates to a (nozzle) apparatus for making, printing or manufacturing a three-dimensional composite material structure or article by depositing, i.e., preferably extruding and solidifying a polymer matrix material and a reinforcement (continuous) fibre material in a sequential or layerwise way onto the substrate or build platform.

The apparatus comprises a first part or member with a fibre feed adapter into or to which a fibre tow can e.g., be fed or introduced, and a polymer inlet connected to an extruder.

The apparatus further comprises a second part or section which is configured to be fit to the fibre feed adapter downflow or downflow of the first part, wherein the first part and the second part, in an assembled state of the apparatus, form a flow channel for the polymeric material and divide said channel into a first zone and the second zone, wherein the apparatus or its parts are configured to heat the polymer material to a first temperature above its glass transition temperature in the first zone and to a second temperature, being higher than the first temperature, in the second zone. A temperature of the polymer material and/or the reinforcement fibre in each of the zones of the channel can preferably be regulated independently.

The first part and the second part of the apparatus and/or further parts of it may pertain to heating blocks coupled to the heating means or a heating device, such as by appropriate connectors. Moreover, the parts may be equipped with a related thermal insulation.

Heating of the polymer material to the first temperature shall serve the purpose and advantageously allow to soften the polymer and to increase permeability of the fibre (tow).

Heating the polymer material to the second temperature shall preferably enable to decrease viscosity of the polymer material, such that it is sufficiently flowable as to impregnate the fibre tow.

The key merits of the proposed heating apparatus design can, thus, be attributed to the introduction of different temperature zones.

Further, the presented design can - contrary to conventional known nozzle devices - be designed so that commercial heating elements, thermistors, and nozzles can be used, and it can even be mounted onto commercial extruders.

As an outstanding difference over the known devices, however, the presented arrangement eliminates the need of a pre-manufacturing, particularly pre-impregnation step, of the fibre tow. Appropriate sizing of the fibre tow is, however, still recommended.

Simultaneously, a great variety of polymers and fibres can be processed by the presented solutions, in an easy and partly self-assembled way without the need of complex system components, such as for the feeding of the fibre and/or complex control of the fibre feed rate. A separate (optional) fibre feed mechanism might still be incorporated as an auxiliary means to increase feeding productivity.

The proposed invention particularly provides for a new deposition nozzle comprising a custom flow channel that enables the in-situ reinforcement of high-performance polymers.

In an embodiment the apparatus comprises a third part which is configured to be fit to the second part downflow for depositing the composite material, wherein the third part is set up to receive or constitutes an exit nozzle or extruder outlet. In case that the third party receives the exit nozzle, the latter may constitute a fourth part of the apparatus that is adapted, e.g., to be inserted or mounted to the second and/or the third part. Said nozzle may relate to a commercial nozzle design, such as including different nozzle diameters to allow for different amounts of powder to be extruded based on the particular component performance requirement.

In an embodiment in the assembled state of the apparatus, the third part also forms part of the channel in a third zone in which the temperature can be regulated, e.g., independently from that one of the first and the second zone. The introduction of a separate (third) zone further increases the thermal degrees of freedom and the possibility to influence viscosity of the polymer, susceptibility of the fibre to be impregnated and extruded as well as pressure and velocity dynamics or kinetics during the extrusion process.

In an embodiment the apparatus further comprises heating means or related cartridges and thermistors, by means of which the (independent) heating of the different parts or blocks of the apparatus can advantageously be facilitated in the different zones.

In an embodiment the apparatus is configured for depositing and merging with the polymer material a continuous reinforcement fibre such as a carbon fibre. The particular capacity of the presented solution to allow for processing of continuous fibres, evidently improves the design freedom of the as-manufactured structure and also its thermal and/or mechanical properties due to the absence of fibre cuts or interruptions. The particular use of a carbon fibre allows for material-specific advantages in terms of mechanical properties and processability.

In an embodiment, the first part, the second part and the third part are separate building blocks of the apparatus.

In an alternative embodiment, said parts are at least partially monolithic. Preferably, at least the second part, the third part and/or the fourth part may particularly be embodied monolithically.

In an embodiment the apparatus is free of a separate drive mechanism for feeding or moving the fibre through the flow channel in the intended operation.

In an embodiment the apparatus is configured such that flow of the polymer material through the flow channel effectuates pulling of the fibre or fibre tow during operation of the apparatus. This functionality may be supported by a traction force that is generated by the relative movement of a substrate or build platform as compared to the liquefier apparatus. According to this embodiment, the overall concept or setup of the apparatus along with that one of the whole ME-device or printer can significantly be improved and simplified.

In an embodiment, in the assembled state of the apparatus, the fibre feed adapter is received by the second part. This embodiment allows for an easy relative mounting and alignment of the first and the second part.

In an embodiment, in the assembled state of the apparatus, the first part and the second part are thermally substantial-ity decoupled or thermally insulated. This advantageously allows for the independent temperature control in the introduced temperature zones. Likewise, the second part and the third part, as well the third part and the first part may accordingly be thermally insulated.

In an embodiment, in the assembled state of the apparatus, and overflow bin is provided in fluid communication with the flow channel, wherein the overflow bin is set up to reduce a flow speed of the polymer material. This embodiment particularly provides for a sort of "self-control" of the flow kinetics and the related stabilisation of the polymer material flow in the channel and an adaption of said flow to a fibre feed rate.

In an embodiment the overflow bin is arranged set up to allow for and receive a backflow of polymeric material, such as through a fibre channel or fibre inlet. Generally, material backflow undesired. However, it is difficult to fully eliminate this artefact.

A further aspect of the present invention relates to a Material Extrusion or Fused Filament Fabrication device comprising the apparatus as described. Advantageously, the technical improvements that are inherent to the apparatus may be exploited as well for the whole device or 3D printer and even extended to a whole industrial manufacturing facility.

A further aspect of the present invention relates to a method of making or manufacturing a three-dimensional composite material structure, such as utilising the apparatus and/or the device as described above, wherein the method comprises providing the polymer material and the (reinforcing) fibre tow. The method further comprises (pre-)heating the polymer material to first temperature above its glass transition temperature and merging, i.e., adding or joining, the fibre of the tow and the polymer material at a second temperature, being higher than the first temperature, wherein the second temperature is sufficient to reduce viscosity of the polymer material in order to impregnate the fibre with the polymer.

The method further comprises forming the composite material and/or depositing the composite material, such as by extrusion through a commercial nozzle exit, on a substrate or platform, e.g., at a third temperature in order to establish the composite material article.

Advantages and embodiments relating to the described apparatus and/or the described ME-device may as well pertain or be valid with regard to the method presented herein, and vice versa.

In an embodiment the polymer material is fed through a flow channel with different temperature zones, wherein the temperature of the polymer material can be regulated independently, and wherein the first temperature is attained in the first zone and the second temperature is attained in the second zone, downflow of the first zone.

In an embodiment, flow of the polymer material through the flow channel during the process advantageously effectuates pulling of the fibre in a self-controlled way.

In an embodiment, the flow channel comprises a third zone downflow of the second zone, and wherein in the third zone, a third temperature is attained that can be independently regulated, wherein the third temperature is preferably lower than the second temperature and/or a pressure of the polymer material in the third zone is lower than a pressure of said material in the second zone.

Further, features and advantageous embodiments become apparent from the following description of the exemplary embodiment in connection with the Figures.

Figures 1 to 5 show schematic sectional images of different design of the inventive (nozzle) apparatus for making or 3D-printing a three-dimensional composite material structure by depositing a polymer matrix material and a reinforcement fibre, respectively.

Figure 6 indicates, by way of a schematic flow chart, method steps of the inventive method of making the three-dimensional composite material structure.

Like elements, elements of the same kind and identically acting elements may be provided with the same reference numerals in the figures. The Figures may particularly be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

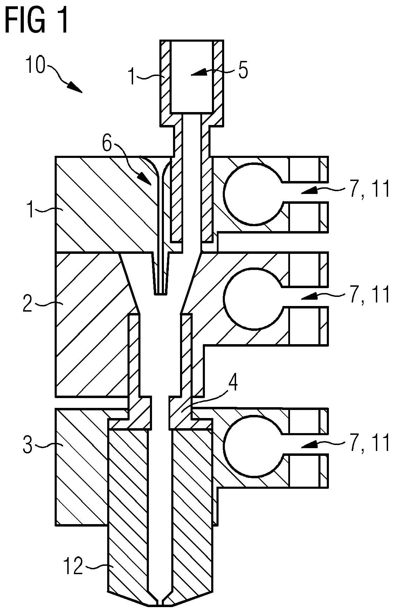

Figure 1 indicates an inventive apparatus 10 for making a three-dimensional composite material structure S. The apparatus 10 is, preferably, a liquefier apparatus for establishing said structure S by depositing a polymer matrix material M and a reinforcement fibre F.

The apparatus 10 may relate to a monolithic or segmented (multi-part) arrangement or a system which can be applied as a substitute to conventional liquefier or as an upgrade or retrofit kit for such nozzles or FDM 3D-printing machines.

The apparatus 10 comprises a first part 1 with a fibre feed adapter 6. The fibre feed adapter 6 may relate to an end piece or feedthrough of or for a fibre tow.

The first part 1 further comprises a polymer inlet 9, into which a polymer precursor material may be fed, such as via mounting a related polymer ejector 5 (polymer entrance). In the side of sectional view of Figure 1, the polymer inlet (channel) is arranged between the fibre inlet or feed adapter 6 and a related clamp fitting a cartridge 7. Via said cartridge 7, preferably, heating means (cf. reference numeral 11), such as resistive heating connectors, thermistors or the like may be fit to independently regulate and attain the temperature of the first piece in the operation of the apparatus 10. The thermistors are preferably mounted on the other or opposite side of the respective cartridge. The respective holes are not explicitly indicated in the cross-sectional views for the sake of a better overview.

Preferably, the first part defines a first zone or (upflow) section of a flow channel C. The first part 1 is preferably configured such that in the first zone Z1, a first temperature T1 above a glass transition temperature of the polymer material M can be attained and regulated.

The apparatus 10 further comprises a second part 2. The second part 2 is preferably configured to be fit to or receive the fibre feed adapter 6 downflow of the first part 1. The second part 2 further comprises a fitting to prolong or extend the channel C for the polymer material M in a second, subsequent or downflow zone Z2. The second part 2 is preferably configured such that in the second zone Z2, a second temperature T2 above the first temperature T1 can be attained and regulated independently from the temperature of the first zone Z1. The mentioned temperature-independent regulation is preferably facilitated by the indicated cartridges and thermal connections of said apparatus 10 to further heat sources.

In other words, the first part 1 and the second part 2, in an assembled state of the apparatus 10, form a flow channel C for the polymeric material M and divide said channel C into a first zone Z1 and a second zone Z2.

For facilitating the thermal decoupling or ability of independently controlling the temperature in the first zone Z1 and the second zone Z2, the first part 1 and the second part 2 are (as-assembled) thermally substantially decoupled.

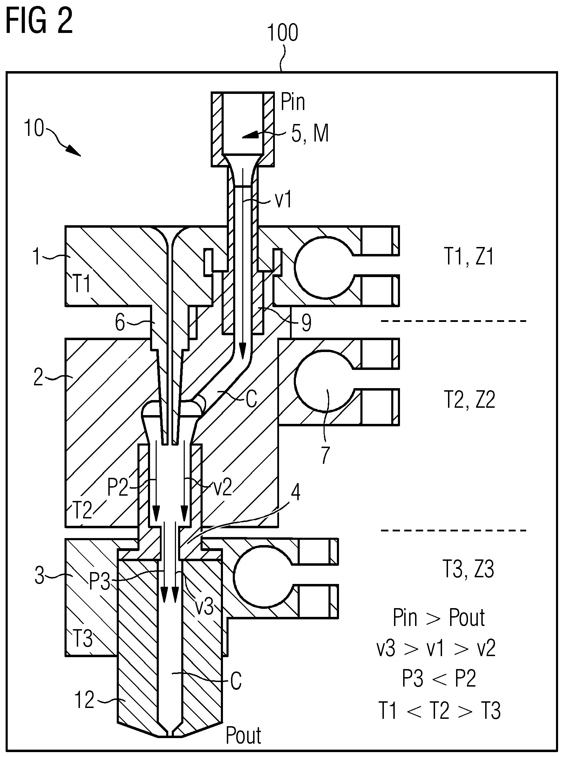

Preferably, the apparatus 10 or its arrangement comprises a third part 3 which is configured to be fit to the second part 2 downflow for depositing the composite material S. The third part 3 preferably further contributes to the forming of the flow channel C, i.e., its third zone Z3, in which e.g., a third temperature T3, being higher or lower than the second or the first temperature, can be applied. To this effect the third part 3 is preferably further set up to receive an exit nozzle or extruder outlet indicated with reference numeral 12 in Figure 2.

The apparatus 10, preferably the second part 2, is configured for depositing and merging with the polymer material M a continuous reinforcement fibre F, such as a carbon fibre.

Even though the inventive apparatus 10 may - however describing in the present Figures its main (essential are anyway the first part 1 and the second part 2) constituents - comprise further components, it is preferably free of a separate drive mechanism for feeding or pulling the fibre F. Instead, and as can be observed in more detail by way of Figure 2, the apparatus 10 is preferably configured such that flow of the polymer material M through the flow channel C effectuates an "automatic" pulling of the fibre F during operation of the apparatus 10.

Figure 2 shows an exemplified indication of the inventive apparatus 10 quite similar to Figure 1. Differing from Figure 1, it is shown that a fourth (connector) part 4 may be mounted e.g., between the second part 2 and the third part 3.

It has been found that the embodiments as indicated in Figures 2 onwards are preferred as they allow to implement a thermal insulation between the first part 1 and the second part 2 more easily as compared to e.g., the embodiment as shown in Figure 1.

Some extrusion or flow kinetics are indicated by way of the parameters P, T and v. Whereas *Pin* shall indicate an inflow (polymer) pressure at the inflow of the first part 1 or the polymer ejector 5, *Pout* shall indicate an outflow (composite) pressure. Parameters T1, T2 and T3 again label the first temperature (cf. first zone Z1), the second temperature (cf. second zone Z2) and the third temperature (cf. third zone Z3), respectively.

Similarly, numerals P2 and P3 shall label (cf. also the related arrows in Figure 2) a polymer flow pressure in the downflow section of the second part 2 and a related pressure in the upflow section of the third part 3, respectively.

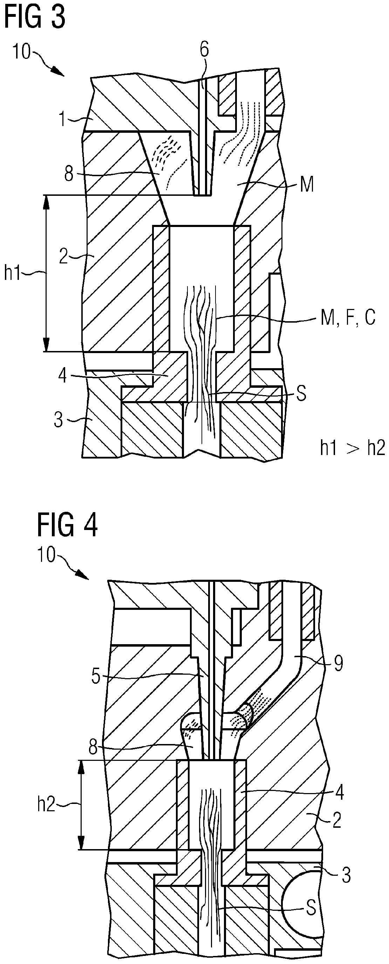

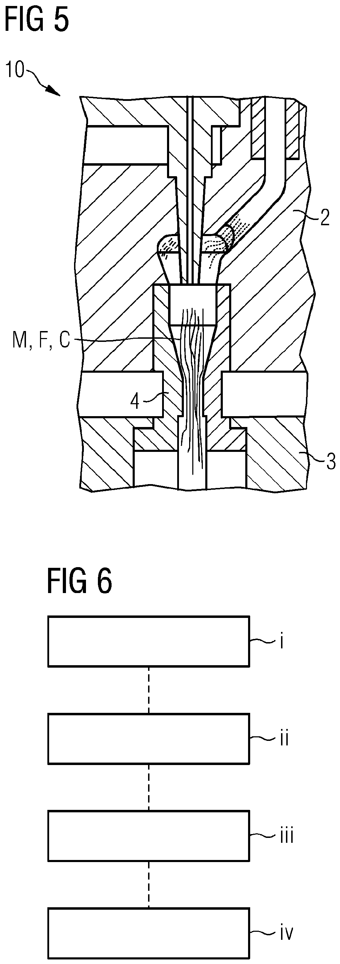

It is further shown in Figure 2, that a diameter or cross-section of the channel C over the first, second and the third zone may vary as indicated in the scheme even though some or other features may not be depicted fully true to scale. As may also be indicated in Figures 4 and 5 below, it is apparent in Figure 3 that an extrusion of flow velocity of the polymer material M in the third zone Z3 is higher than its velocity v1 and v2 in the upflow sections. Owed to the reduced diameter of the channel C before joining or merging to the fibre or fibre inlet adapter 6, the velocity v1 is preferably higher than the polymer velocity v2 further downflow in the second zone 2 of the channel C.

Under this assumption, the following relations shall apply in a preferred embodiment and operation (cf. method of making the three-dimensional composite structure as described further below) of the apparatus 10:
Pin > Pout;
v3 > v1 > v2;
P3 < P2;
T1 < T2 > T3.

Schematically, Figure 2 also shows a Material Extrusion device indicated with reference numeral 100 comprising the apparatus 10.

More specific inventive design embodiments of the apparatus 10 are detailed out by way of Figures 3 to 5.

Figure 3 particularly indicates that the apparatus 10 may feature an advantageous overflow bin 8 which is preferably provided between the first part 1 and the second part 2 and/or in fluid communication with the flow channel C. The overflow bin 8 is preferably set up to reduce a flow speed of the polymer material M. To this effect the channel C opens up in that relevant section. In this way, the flow kinetics of the polymer may automatically be adapted to an expedient fibre feed rate. At the same time a "pulling effect" of the matrix material M pulling the fibre in (downward) flow direction, may be facilitated without the need of any separate external drive mechanism for the fibre.

At least in the middle part of the Figure, i.e., the second part 2, the polymer, a related fibre and/or the composite material C resulting from the polymer and the reinforcing fibre C are indicated.

Figure 4 indicates, in a slightly different design, a similar arrangement, wherein particularly the volume of the overflow bin 8 is reduced as compared to the one indicated in Figure 3. Nevertheless, all inventive advantages may be imparted as well with the design as shown in Figures 4 and 5.

The particular design of the liquefier as shown in Figure 5 has proven to be most effective in the minimisation of material backflow. This is due to the implementation of the fourth connector part 4, particularly extending the channel length and/or optimising the course of the channel in the most critical region.

In other words, the present invention involves a new deposition nozzle comprising an improved (customized) flow channel that enables the in-situ reinforcement of high-performance polymers with continuous carbon fibres. In addition, it is designed so that the channel is divided into three zones (Z1 to Z3), for each of which the temperature can be regulated independently. This way, the viscosity of the polymer in each section of the flow channel can be controlled to achieve this objective.

As described, the presented solution does not necessarily include a feeding mechanism for the continuous fibre tow, rather the polymer flow is expected to pull it, acting in combination with the traction force generated by the build platform which is not explicitly indicated. It is, however, apparent from the perspective of a skilled person that the deposited composite material C is of course extruded and deposited on a substrate in order to establish a related object according to its predetermined design.

In the first zone Z1, the fibre tow and the polymer M are introduced to heat (just above the glass transition temperature of the polymer) in order to soften the polymer and increase the permeability of the carbon fibre tow.

In the second section or zone Z2, the temperature is increased significantly, so that the viscosity of the polymer is decreased enough to particularly impregnate the fibre tow.

The third zone Z3 is e.g., designed similar to a commercial Material Extrusion (hot-end) nozzle through which the composite exits. This section allows for the insertion of commercial nozzles with different diameters to allow for different amounts of polymer to be extruded based on component performance requirements.

Figure 6 shows a schematic simplified flowchart indicating method steps of an inventive method of making or establishing the three-dimensional composite material structure S via ME such as by way of the apparatus 10 as described above.

The method comprises, (i), providing a polymer material M and a fibre tow F.

The method further comprises, (ii), pre-heating the polymer material M to a first temperature T1 above its glass transition temperature.

The method still further comprises, (iii), merging a fibre F of the tow and the polymer material M at a second temperature T2, being higher than the first temperature T1, wherein the second temperature T2 is sufficient to reduce viscosity of the polymer material M to impregnate the fibre F with the polymer M.

Finally, the method comprises, (iv), forming the composite material S and depositing the composite material S on a substrate.

As described in parts already by way of the inventive apparatus 10 above, the polymer material M is fed through the flow channel C with its different temperature zones, wherein the temperature of the polymer material M can be regulated independently, and wherein the first temperature T1 is attained in the first zone Z1 and the second temperature T2 is attained in the second, subsequent, zone Z2. Finally, in the third zone Z3, a third temperature T3 is attained which is e.g., lower than the second temperature T2.

Moreover, as described above, a pressure P3 of the polymer material M in the third zone Z3 is preferably lower than a pressure P2 of said material M in the second zone Z2.

The established structure, article or component as referred to herein may particularly relate to or to a part of a high-performance and lightweight article of complex shape, such as a component applied in blower components, fan blades, or in the context of wind power generation or tooling equipment, for instance.

## Claims

1. A nozzle apparatus (10) for making a three-dimensional composite material structure (S) by depositing a polymer matrix material (M) and a reinforcement fibre (F), the apparatus (10) comprising:
- a first part (1) with a fibre feed adapter (6) and a polymer inlet (9), and
- a second part (2), which is configured to be fit to the fibre feed adapter (6) downflow of the first part (1), wherein the first part (1) and the second part (2), in an assembled state of the apparatus (10), form a flow channel (C) for the polymeric material (M) and divide said channel (C) into a first zone (Z1) and a second zone (Z2), wherein the apparatus (10) is configured to heat the polymer material (M) to a first temperature (T1) above its glass transition temperature in the first zone (Z1) and to a second temperature (T2), being higher than the first temperature (T1), in the second zone (Z2), and wherein for each of the zones (Z1, Z2) of the channel (C) a temperature of the polymeric material (M) can be regulated independently.

2. The apparatus (10) according to claim 1, comprising a third part (3) which is configured to be fit to the second part (2) downflow for depositing the composite material (S), wherein the third part (3) is set up to receive or constitutes an exit nozzle (12).

3. The apparatus (10) according to claim 2, wherein in the assembled state of the apparatus (10) the third part (3) also forms part of the channel (C) in a third zone (Z3) in which the temperature of the polymeric material can be regulated independently from the first and the second zone (Z1, Z2).

4. The apparatus (10) according to one of the previous claims, further comprising heating means (11) which can be applied to the parts of the apparatus (10) in order to independently control the temperature in the different zones of the flow channel (C).

5. The apparatus (10) according to one of the previous claims, being configured for depositing and merging with the polymer material (M) a continuous reinforcement fibre (F), such as a carbon fibre.

6. The apparatus (10) according to one of the previous claims, wherein the apparatus (10) is free of a separate drive mechanism for feeding or moving the fibre (F).

7. The apparatus (10) according to one of the previous claims, wherein the apparatus (10) is configured such that flow of the polymer material (M) through the flow channel (C) effectuates pulling of the fibre (F) during operation of the apparatus (10).

8. The apparatus (10) according to one of the previous claims, wherein in the assembled state of the apparatus (10) the fibre feed adapter (6) is received by the second part (2).

9. The apparatus (10) according to one of the previous claims, wherein in the assembled state of the apparatus (10) the first part (1) and the second part (2) are thermally substantially decoupled.

10. The apparatus (10) according to one of the previous claims, wherein in the assembled state of the apparatus (10) an overflow bin (8) is provided in fluid communication with the flow channel (C), wherein the overflow bin (8) is set up to reduce a flow speed of the polymer material (M).

11. A fused deposition modelling device (100) comprising the apparatus (10) according to one of the previous claims.

12. A method of making a three-dimensional composite material structure (S) the method comprising:
- (i) providing a polymer material (M) and a fibre tow (F),
- (ii) pre-heating the polymer material (M) to a first temperature (T1) above its glass transition temperature,
- (iii) merging a fibre (F) of the tow and the polymer material (M) at a second temperature (T2), being higher than the first temperature (T1), wherein the second temperature (T2) is sufficient to reduce viscosity of the polymer material (M) in order to impregnate the fibre (F) with the polymer (M), and
- (iv) forming the composite material (S) and depositing the composite material (S) on a substrate.

13. The method according to claim 12, wherein the polymer material (M) is fed through a flow channel (C) with different temperature zones, wherein the temperature of the polymer material (M) can be regulated independently, and wherein the first temperature (T1) is attained in the first zone (Z1) and the second temperature (T2) is attained in a second zone (Z2) downflow of the first zone (Z1).

14. The method according to claim 13, wherein the flow channel (C) comprises a third zone (Z3) downflow of the second zone (Z2), and wherein in the third zone (Z3), a third temperature (T3) is attained which is e.g. lower than the second temperature (T2) and/or a pressure (P3) of the polymer material (M) in the third zone (Z3) is lower than a pressure (P2) of said material (M) in the second zone (Z2).
